# FASCICULE DE BREVET EUROPEEN

(11) **EP 3 655 675 B1**
(45) Date de publication et mention de la délivrance du brevet: **07.09.2022**
(21) Numéro de dépôt: 18735651.4
(22) Date de dépôt: 25.05.2018
(51) Int. Cl.: F16D 55/225, F16D 65/00

(54) **SYSTÈME PAR FILTRE FLUIDIQUE DE FREINAGE ÉQUIPE D'UN ORGANE COLLECTEUR DE MICRO/NANOPARTICULES**
BREMSFLÜSSIGKEITSFILTERSYSTEM MIT MIKRO-/NANOPARTIKELAKKUMULATOR
BRAKE FLUID FILTER SYSTEM PROVIDED WITH A MICRO/NANOPARTICLE ACCUMULATING DEVICE

(30) Priorité: 17.07.2017 FR 1756722
(43) Date de publication de la demande: 27.05.2020
(73) Titulaire: Renault s.a.s, 92100 Boulogne Billancourt (FR)
(72) Inventeur: BISSIERES, Denis, 91300 Massy (FR)
(74) Mandataire: Renault Group
(86) Numéro de dépôt international: PCT/FR2018/051233
(87) Numéro de publication internationale: WO 2019/016435

(56) Documents cités:
- FR-A1- 2 997 743
- US-A- 4 205 412
- US-A1- 2013 105 252
- US-A1- 2014 262 633

## Description

L'invention se rapporte à un système de freinage peu polluant pour tout véhicule. Plus particulièrement, l'invention concerne un système de freinage équipé d'un organe collecteur de poussière par filtre liquide.

Dans le domaine des véhicules automobiles, il est connu des filtres à particules installés dans la ligne d'échappement des moteurs thermiques (moteur Diesel ou moteur à essence) afin de limiter la masse des particules fines rejetées dans l'atmosphère extérieure. En fonction de leur taille, les particules peuvent être des nanoparticules ou des microparticules. Les particules les plus fines sont très critiquées pour leur effet cancérigène, pour le risque de développer des maladies respiratoires, d'inhibiteur allergique et cardio-vasculaire.

Il existe de différents de système de filtrage pour l'échappement des moteurs thermiques. Par exemple, un filtre à particules pour moteur Diesel (en anglais Diesel Particulate Filter), ou un filtre à particules aériennes à haute efficacité (en anglais High Efficiency Particulate Air) pour les systèmes de ventilation habitacle ou encore des filtres ioniques ou électrostatiques.

Il est observé que le freinage des roues produit également de la poussière comportant des particules fines potentiellement cancérigènes. Or, très peu de dispositifs proposent le traitement des poussières issues du freinage, contrairement à de nombreux systèmes de filtrage pour l'échappement des moteurs thermiques, dont quelques-uns sont cités précédemment.

Une des solutions pour récupérer de la poussière générée par le freinage est proposée par le document FR2997743. Il s'agit d'un organe d'aspiration installé en contact avec un disque d'une roue, et à proximité d'un patin qui vient frotter contre le disque pour l'arrêter. L'organe d'aspiration comprend une bouche d'aspiration reliée à une turbine pour aspirer les particules et un réservoir collecteur installé à la suite de la turbine. Cette dernière, étant en contact sur le disque, est entraînée en rotation par celui-ci. En tournant, la turbine aspire de la poussière résultant du freinage par la bouche d'aspiration et les propulser dans le réservoir collecteur.

La puissance d'aspiration de la turbine dépend de la vitesse de rotation de la roue. Par conséquent, pendant le freinage, la roue, étant décélérée, réduit la vitesse de la turbine. L'efficacité d'aspiration au cours du freinage n'est donc pas constante sur la durée.

En outre, la turbine a un risque de pollution car elle est toujours en contact sur le disque. Le contact entre la turbine et le disque peut occasionner des frottements qui génèrent ensuite de la poussière potentiellement polluant.

De plus, pour capter les particules fines de la poussière, le réservoir collecteur est équipé d'un filtre en média fibreux non tissé. Ce filtre doit être remplacé régulièrement afin de capter le plus possible de particules fines. Cependant, le filtre en lui-même et le remplacement dudit filtre a un coût important.

De même, le document US4205412 propose un système de récupération de poussière de frein automobile, ce système rapporte un organe collecteur à la garniture de frein une fois le pneu de la roue retiré pour venir aspirer les poussières de frein, cette solution pour atelier d'entretien automobile est donc incompatible avec le fonctionnement d'un sytème de freinage de véhicule.

Ainsi, un objectif de l'invention est de proposer un système de freinage peu polluant équipé d'un organe collecteur de poussière résultant du freinage qui est efficace, simple à mettre place et peu coûteux.

A cet effet, l'invention concerne un système de freinage pour véhicule comprenant :
- une garniture de frein destiné à venir frotter contre une roue du véhicule pour la freiner; le frottement entre la roue et la garniture de frein générant de la poussière ;
- un organe collecteur de poussière comprenant :
- une buse d'aspiration d'air disposée à proximité immédiate de la garniture de frein;
- un réservoir collecteur de poussière relié à la buse d'aspiration.

Selon l'invention, l'organe collecteur comprend une turbine d'aspiration d'air installée à la suite du réservoir collecteur. En outre, le réservoir collecteur contient un fluide à travers lequel passe l'air aspiré.

Dans le cas où la roue est équipée d'un frein à disque, la garniture de frein vient frotter contre un disque de la roue. En revanche, pour une roue avec un frein à tambour, la garniture de frein vient en contact avec un tambour de la roue.

Grâce à l'invention, la poussière générée par le frottement entre la garniture de frein et la roue pendant le freinage est captée par l'organe collecteur. En effet, au moyen de la turbine d'aspiration, un flux d'air portant de la poussière est aspiré dans l'organe collecteur. Le flux d'air passe par le réservoir collecteur contenant du fluide avant d'arriver à la turbine d'aspiration. Arrivant au réservoir collecteur, l'air aspiré traverse le fluide sous forme de bulles enveloppant des grains de poussière.

Dans l'exemple où le fluide contenu dans le réservoir est un liquide, des grains de poussière, en suspension au centre des bulles, sont humidifiées et deviennent moins volatiles. Ainsi, la poussière est retenue par le liquide et elle est restée dans le réservoir collecteur.

La poussière ainsi captée s'accumule au fond du réservoir par gravitation. Il s'agit donc une décantation de la poussière dans le liquide du réservoir collecteur. Tout comme pour l'eau ou l'humidité ainsi captée. De cette manière, pour récupérer de la poussière accumulée, il suffit de vidanger le réservoir collecteur de temps en temps, par exemple lors d'une des révisions techniques du véhicule. Il est également possible de filtrer du liquide afin de récupérer une partie du liquide non polluée pour une deuxième utilisation dans le réservoir collecteur. Le liquide peut être par exemple de l'huile, un piège à poussière efficace et peu coûteux.

Le flux d'air aspiré ne comporte plus de poussière en arrivant à la turbine d'aspiration. Il est ainsi refoulé vers l'extérieur.

L'organe collecteur selon l'invention est donc un aspirateur à poussière par rétention humide via un réservoir liquide qui est simple, efficace et facile à mettre en place.

Selon le contexte présenté plus haut, la poussière générée par le freinage peut contenir des particules (micro- ou nanoparticules). On comprend donc que les grains de poussières peuvent être les particules potentiellement cancérigènes.

Selon l'invention, le réservoir collecteur comprend une turbine de barbotage disposée au moins partiellement dans le fluide. Ainsi, la turbine de barbotage, en mode actif, crée une ligne de niveau constante, au moins au niveau central du fluide contenu dans le réservoir collecteur.

Dans l'exemple où le fluide contenu dans le réservoir est un liquide, la masse du liquide est remuée par la turbine de barbotage de manière à avoir un niveau de liquide stable, au moins dans la zone centrale. Ainsi, la ligne de niveau du liquide autour de la zone de bullage résiste à des accélérations ou à des décélérations du véhicule pendant son déplacement et permet une maîtrise de son niveau pour le dimensionnement du bullage, qui ce qui est indispensable pour l'efficacité et la constance de la filtration humide quel que soit le niveau du réservoir au repos (avec les variations du volume apportées par les particules/humidité absorbées) et les accélérations qu'il subit.

A titre d'exemple, la turbine de barbotage peut être conçue de manière à créer une ligne de niveau avec un profil convexe.

Selon une caractéristique optionnelle de l'invention, un conduit de liaison est relié d'une part à la turbine d'aspiration et est immergé d'autre part au niveau central du fluide dans le réservoir collecteur. Ainsi, après avoir traversé le fluide du réservoir collecteur, l'air, désormais débarrassé de la poussière, va vers la turbine d'aspiration via le conduit de liaison.

Selon le paragraphe précédent, le conduit de liaison comprend une première extrémité immergée dans le fluide et comprenant des pics s'étendant vers un fond du réservoir collecteur. Les pics servent à casser les bulles portant les grains de poussière en bulles plus fines, ce qui permet d'obtenir un meilleur mouillage ou une meilleure humidification des grains de poussière.

Selon une caractéristique optionnelle de l'invention, la distance entre le sommet supérieur de chaque pic du conduit de liaison et une ligne de niveau au niveau central du fluide de l'ordre de quelques millimètres. Cette distance est mesurée selon la verticale et elle correspond à la demi distance minimum parcourue par les bulles fines entres les deux interfaces eau-air, c'est-à-dire la ligne de niveau. Cette distance parcourue a une influence importante sur le mouillage des grains de poussière ou des particules. Elle doit être la plus longue possible mais assez courte pour que la dépression créée par la turbine d'aspiration permette le bullage.

Selon une caractéristique optionnelle de l'invention, la turbine d'aspiration entraîne la turbine de barbotage en rotation au moyen d'un ensemble d'engrenage. De cette manière, on a besoin d'un seul moteur d'entraînement pour faire tourner à la fois la turbine d'aspiration et la turbine de barbotage. Il s'agit d'une installation économique et peu encombrante. Alternativement, les turbines d'aspiration et de barbotage sont entraînées par deux moteurs indépendants.

Selon le paragraphe précédent, l'ensemble d'engrenage comprend un premier pignon relié à la turbine d'aspiration engrenant avec un deuxième pignon relié à la turbine de barbotage; le premier pignon ayant un diamètre plus petit que celui du deuxième pignon. Ainsi, l'ensemble d'engrenage a une fonction de réducteur de vitesse dans le sens où la turbine de barbotage tourne moins vite que la turbine d'aspiration.

Selon un mode de réalisation optionnel de l'invention, le système de freinage est de type frein à disque comportant un piston actionnant sur la garniture de frein. La turbine d'aspiration et la turbine de barbotage sont mises en rotation lorsque la pression dans le piston augmente. De cette manière, l'organe collecteur de la poussière est activé en temps utile, c'est-à-dire lors du freinage de la roue, pour récupérer de la poussière dégagée de cette action. Pendant une condition de roulage normale du véhicule, l'organe collecteur est au repos et ne consomme pas d'énergie.

Selon un mode de réalisation facultatif de l'invention, la roue tourne selon un premier sens de rotation. L'organe collecteur de poussière comprend deux buses d'aspiration disposées respectivement en amont et en aval de la garniture de frein par rapport au premier sens de rotation du rotor. Ainsi, les buses d'aspirations permettent de récupérer de la poussière pendant le freinage du véhicule dans les deux sens de déplacement, c'est-à-dire en marche avant ou en marche arrière.

Selon une caractéristique facultative de l'invention, le fluide contenu dans le réservoir collecteur de poussière est un liquide. De préférence, il doit être bien moins dense que l'eau afin de permettre à l'humidité aspirée de venir se décanter au fond du réservoir.

Selon une caractéristique facultative de l'invention, le liquide contenu dans le réservoir collecteur est de l'huile. L'huile est un liquide simple à trouver et peu coûteux. L'huile doit être d'une très grande fluidité afin que le bullage, même s'il est limité en taille par le pic intérieur, fasse les bulles les plus fines possibles. Ainsi, le barbotage consomme le moins d'énergie possible et fait le plus de projections de liquide possible, au moins dans la zone de barbotage. L'huile a aussi l'avantage de pouvoir également permettre la lubrification d'un éventuel réducteur (si l'actionnement de la turbine d'aspiration et de barbotage sont liées par le même entraînement) ainsi que des paliers ou autres roulements.

L'invention concerne également un véhicule automobile qui comprend un système de freinage réalisé selon au moins une des caractéristiques précédentes.

D'autres caractéristiques et avantages innovants ressortiront de la description ci-après, fournie à titre indicatif et nullement limitatif, en référence aux dessins annexés, dans lesquels :
- la figure 1 représente, de manière schématique, un exemple de réalisation du système de freinage selon l'invention;
- la figure 2 représente une vue en perspective d'un organe collecteur du système de freinage selon l'invention;
- la figure 3 représente une vue de face de l'organe collecteur illustré à la figure 2, l'organe collecteur étant en mode repos ;
- la figure 4 représente la même vue que la figure 3 avec l'organe collecteur en mode actif;
- la figure 5 représente une vue de face d'une turbine de barbotage de l'organe collecteur ;
- la figure 6 représente une vue de coupe selon le plan VI-VI illustré à la figure 5 ;
- la figure 7 représente le même vue que la figure 4 en absence d'une turbine de barbotage de l'organe collecteur;
- la figure 8 représente une vue en perspective et une vue de coupe d'une masse liquide dans un réservoir collecteur lorsque l'organe collecteur est en mode actif ;
- la figure 9 représente une vue en perspective du détail référencé IX sur la figure 7 .

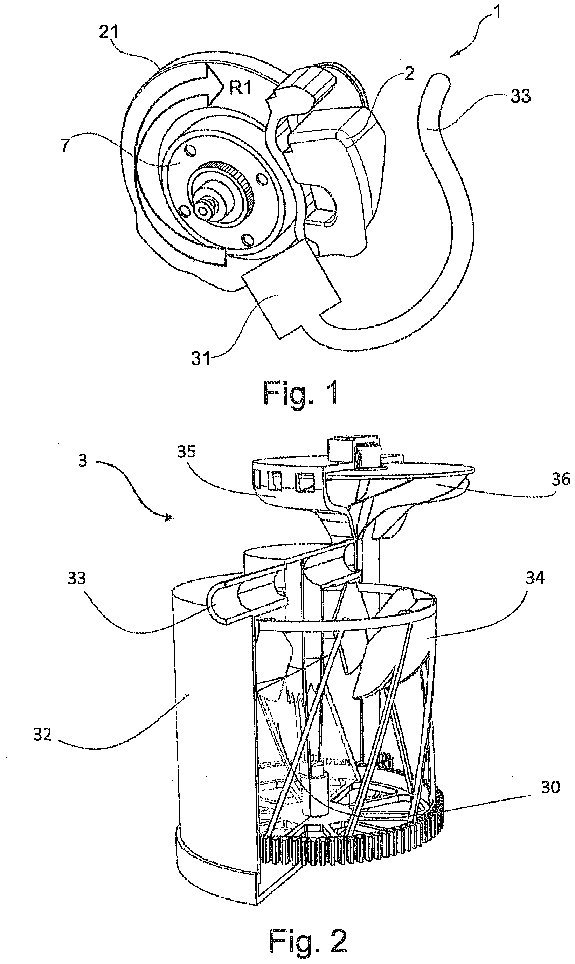

Dans le présent document, sauf indication contraire, les termes « haut », « bas », « inférieur », « supérieur » correspondent au haut et au bas des figures 1 à 9 telles qu'elles sont présentées. Par ailleurs, le terme « vertical » désigne la direction s'étendant de haut en bas des figures 1 à 9. Le terme « horizontal » désigne la direction perpendiculaire à la direction verticale.

La figure 1 illustre un exemple du système de freinage 1 selon l'invention. Ici, le système de freinage 1 est de type frein à disque. Il comprend un étrier 2 actionnant sur un disque 21 solidarisé à un moyeu pour freiner une roue. Pour ce faire, l'étrier 2 comprend une garniture de frein 22 (pas visible à la figure 1) qui vient serrer le disque 21 jusqu'à l'arrêt de celui-ci. Dans un système de freinage hydraulique, le serrage de la garniture de frein est commandé par un piston hydraulique.

Pendant le freinage, le frottement entre la garniture de frein et le disque 21 génère de la poussière qui contient éventuellement des particules fines dangereuses pour la santé.

Dans cet exemple, le disque 21 tourne dans un premier sens de rotation R1 faisant avancer le véhicule.

Une buse d'aspiration 31 d'un organe collecteur de poussière 3 est installée après l'étrier de part et d'autre du disque 21, c'est-à-dire en aval de l'étrier 2 par rapport au premier sens de rotation R1 du disque. La buse d'aspiration 31 est placée à proximité immédiate des garnitures de frein 22, c'est-à-dire à une distance de l'ordre de quelques millimètres. De cette manière, presque la totalité de la poussière générée pendant le freinage est captée immédiatement. L'organe collecteur de poussière 3 est ci-après appelé en raccourci l'organe collecteur 3.

Optionnellement, on peut installer une buse d'aspiration 31 sur chaque côté du disque. Les deux buses d'aspiration sont situées au même niveau, c'est-à-dire juste après l'étrier par rapport au premier sens de rotation R1 du disque et symétrique par rapport à un plan du disque.

On peut également installer sur chaque côté du disque une buse d'aspiration en aval de l'étrier et une autre buse en amont de l'étrier, toujours par rapport au premier sens de rotation de la roue. La buse d'aspiration située en amont de l'étrier sert à capturer de la poussière pendant le freinage du véhicule faisant marche arrière. Les buses d'aspiration rejoignent à un conduit commun.

Selon un autre exemple de l'invention, le système de freinage peut être de type frein à tambour. Dans ce cas, la buse d'aspiration est placée entre deux garnitures de frein venant en contact avec un tambour de frein.

La buse d'aspiration 31 amène de la poussière vers un réservoir collecteur 32 illustré à la figure 2 via un conduit d'entrée 33. Le réservoir collecteur 32 contient un fluide, dans cet exemple un liquide 30 et sera appelé ci-après en raccourci le réservoir 32.

Une turbine de barbotage 34 est logée dans le réservoir 32. Elle est partiellement plongée dans le liquide 30. Le liquide 30 est préférentiellement un liquide dont la masse volumique est inférieure à celle de l'eau de façon à ce que l'eau/l'humidité retenue se dépose au fond du réservoir et ne pollue pas la surface. Selon l'invention et dans cet exemple, le réservoir 32 contient de l'huile qui permet de mieux lubrifier des composants mécaniques qui s'y trouvent.

L'organe collecteur 3 comprend en outre un compartiment d'aspiration 35 dans lequel est logée une turbine d'aspiration 36. Le compartiment d'aspiration 35 est installé à la suite du réservoir 32. Un conduit de liaison 37 relie le réservoir 32 au compartiment d'aspiration 35. Le conduit de liaison 37 comprend une première extrémité 371 qui est plongée dans le liquide 30 du réservoir 32. A noter que le conduit d'entrée 33 débouche dans le réservoir par un orifice 331 qui est placé juste à côté du conduit de liaison 37.

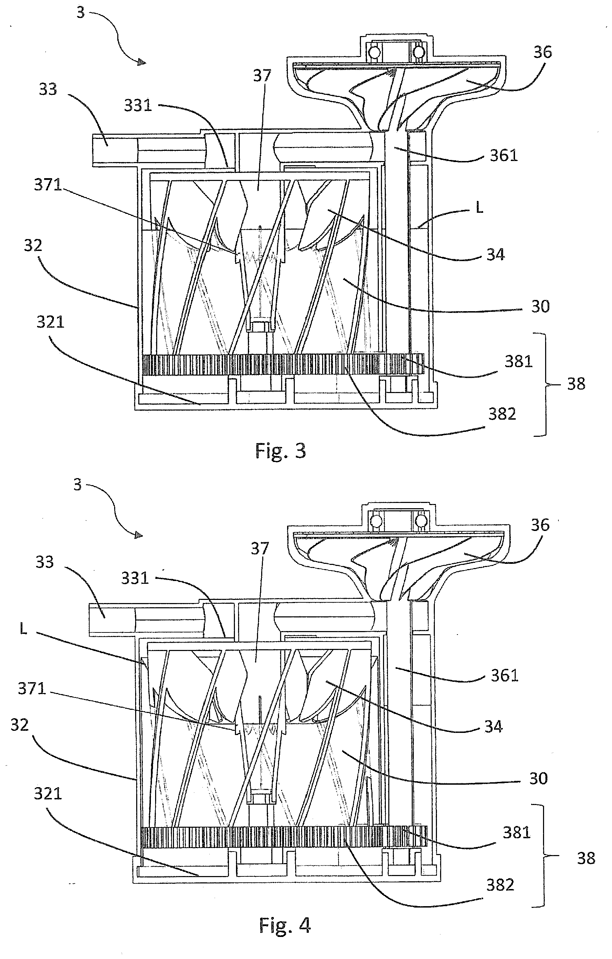

Les figures 3 et 4 représentent le réservoir 32 et le compartiment d'aspiration 35 lorsque l'organe collecteur 3 est respectivement en mode repos et en mode actif. Sur la figure 3, en mode repos de l'organe collecteur 3, le liquide 30 dans le réservoir a une ligne de niveau L horizontale. On entend par la ligne de niveau l'interface entre du liquide et de l'air dans le réservoir collecteur 32.

La turbine de barbotage 34 est entraînée par la turbine d'aspiration 36 au moyen d'un ensemble d'engrenage 38. Ledit ensemble d'engrenage 38 est composé d'un premier pignon 381 emmanché dans un arbre de rotation 361 de la turbine d'aspiration 36 et d'un deuxième pignon 382 de la turbine de barbotage 34. Les pignons 381 et 382 engrènent l'un avec l'autre. Le diamètre du premier pignon 381 est plus petit que celui du deuxième pignon 382. Ainsi, la vitesse de rotation de la turbine de barbotage 34 est moins élevée que celle de la turbine d'aspiration 36.

La rotation de la turbine d'aspiration 36 est commandée par un moteur d'entraînement (non illustré sur les figures), qui n'a ici aucun lien avec le moyeu du véhicule. De cette manière, l'actionnement de l'organe collecteur 3 est indépendant de la vitesse de rotation de la roue du véhicule. Ainsi, la performance d'aspiration n'est pas influée par d'autres facteurs extérieurs de l'organe collecteur, ce qui assure une efficacité d'aspiration constante.

La vitesse de rotation doit être calibrée pour chacune des turbines (barbotage et aspirations) afin d'obtenir un barbotage suffisant ainsi une ligne de niveau satisfaisante pour la première, et une dépression d'aspiration pour la seconde, permettant un bullage ainsi qu'un débit d'aspiration suffisant pour un taux élevé de traitement de particules.

Le début de l'aspiration, intervient dès que la pression dans les étriers augmente et reste actif un temps déterminé après fin du freinage pour aspirer les particules libérées quand garnitures et surfaces de frottement sur disques ou tambours se séparent.

Selon la configuration illustrée dans cet exemple, la turbine de barbotage 34 et la turbine d'aspiration 36 sont entraînées en rotation ensemble grâce au moteur d'entraînement. Alternativement, la turbine de barbotage 34 peut être entraînée indépendamment de la turbine d'aspiration 36.

Dans cet exemple, le moteur d'entraînement est activé à chaque début de montée en pression dans les étriers, plus précisément dans le piston hydraulique qui fait serrer les garnitures de frein. Préférentiellement, le délai d'utilisation s'étend au-delà de la période de montée en pression dans le circuit de freinage.

Sur la figure 4, l'organe collecteur 3 est en mode actif, c'est-à-dire lorsque le moteur d'entraînement est activé, la ligne de niveau L du liquide dans le réservoir a un profil convexe avec une portion au centre relativement stable et à l'horizontale. La turbine de barbotage 34 tournant régulièrement, la ligne de niveau L maintient ce profil convexe maîtrisé. Ainsi, la masse du liquide dans le réservoir 32, du moins au niveau du centre de celle-ci, résiste au mouvement occasionné par l'accélération ou par la décélération du véhicule. Cette masse du liquide 30 résiste également à une variation de niveau issue du fait que le liquide s'enrichit de particules aspirées volatiles. Ce phénomène sera détaillé plus loin dans la description.

Il est important que la première extrémité 371 du conduit de liaison soit immergée dans le liquide du réservoir au niveau central de la masse liquide car c'est l'endroit où le liquide est plus stable pendant le fonctionnement de l'organe collecteur 3. A la première extrémité 371 du conduit de liaison 37, il y a des pics 372 triangulaires qui sont orientés vers un fond 321 du réservoir 32. Le conduit de liaison 37 est configuré de sorte que les pics 372 soient toujours immergés dans le liquide, peu importe le mode de fonctionnement de l'organe collecteur 3, en état actif ou au repos.

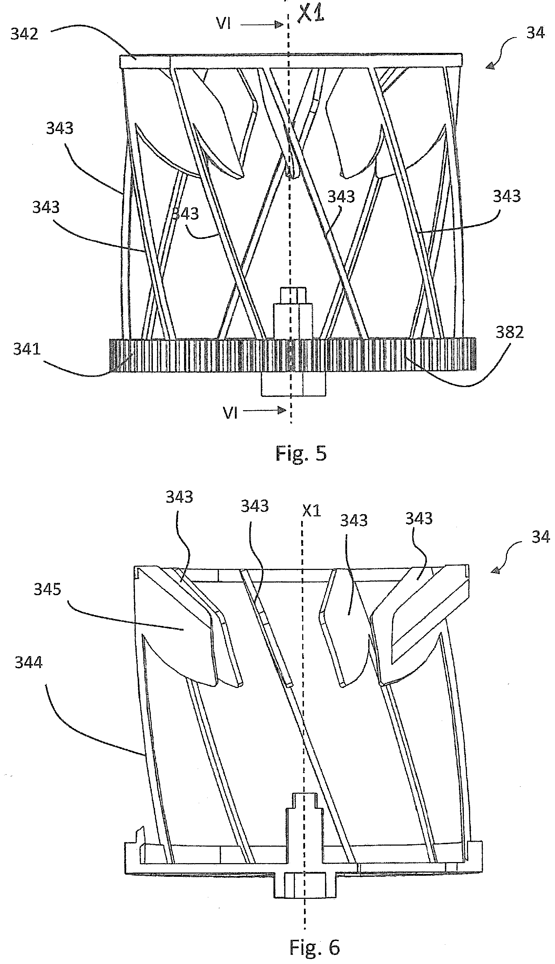

Selon l'invention et dans cet exemple, afin de créer un profil convexe de la ligne de niveau L, la turbine de barbotage 34 a une structure particulière, comme illustré aux figures 5 et 6. La turbine de barbotage 34 a la forme d'un cylindre creux avec une base inférieure 341 et une base supérieure 342. La base inférieure 341 est le deuxième pignon 382 entraîné par le premier pignon 381. La base supérieure 342 est un anneau dont le diamètre est à peu près égal à la base inférieure 341.

La paroi latérale de la turbine de barbotage 34 est constituée de pales 343 espacées de manière régulière l'une de l'autre et inclinées par rapport à un axe de rotation X1 de ladite turbine 34. Chaque pale 343 comprend un tronc longitudinal 344 reliant la base inférieure 341 à la base supérieure 342 et une planche 345 situé au niveau supérieur du tronc 344. Chaque planche 345 s'étend vers le bas et vers l'axe de rotation X1 de la turbine de barbotage 34.

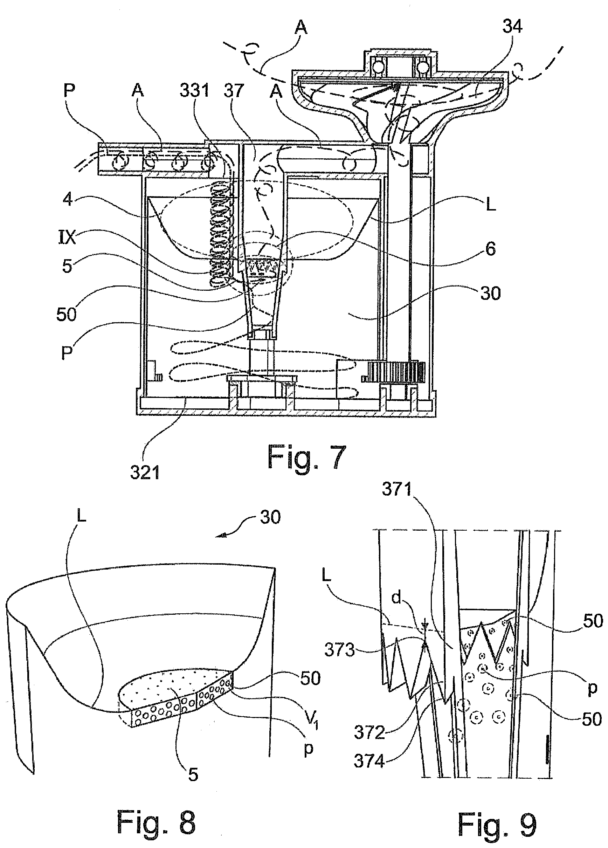

Le principe de fonctionnement de l'organe collecteur 3 du système de freinage 1 sera expliqué en détails ci-après avec l'illustration des figures 7 à 9.

Lorsque la turbine d'aspiration 36 est mise en marche par le moteur d'entraînement, par exemple suite à une montée de pression dans l'étrier 2, elle entraîne la turbine de barbotage 34 en rotation. Cette dernière, en tournant, crée le profil convexe de la ligne de niveau L dans le réservoir 32. En même temps, la turbine d'aspiration 36 génère un flux d'air A contenant de la poussière et qui se déplace de la buse d'aspiration 31 vers ladite turbine 36. Sur le chemin, le flux d'air A passe par le réservoir 32 contenant le liquide 30. Le chemin de déplacement du flux d'air A est représenté par la ligne pointillée tandis que les grains de poussière sont représentés par des points P sur la figure 7. Comme expliqué précédemment, les grains de poussière peuvent être des particules potentiellement cancérigènes. Donc, pour faciliter la lecture, dans la suite de la description, le terme « particule » sera utilisé au lieu du « grain de poussière ».

Arrivant dans le réservoir 32, le flux d'air A traverse une zone d'humidification 4 dans laquelle les particules sont humidifiées par l'air mélangé avec de fines gouttes de liquide. Cette zone d'humidification 4, créée par la rotation de la turbine de barbotage 34, est située au-dessus de la ligne de niveau L du liquide. Une partie des particules P, en traversant cette zone, sont mouillées par les projections humides résultant du barbotage ou collées sur les pâles humides de la turbine de barbotage. Il s'agit ici d'une première étape de collage des particules avec des gouttes liquides dans la zone d'humidification 4.

Le flux d'air, portant les particules ainsi humidifiées, arrive à une zone de bullage 5. Cette zone de bullage 5 est un volume de liquide V à faible épaisseur qui se trouve au niveau central du liquide 30. La zone de bullage 5, illustrée à la figure 8, est située très proche de la ligne de niveau L. Le flux d'air dirige vers la zone de bullage 5 car c'est l'endroit où il y a moins de liquide à traverser.

Dans cette zone de bullage 5, plusieurs phénomènes se produisent. Tout d'abord, le flux d'air A, en pénétrant dans le volume de liquide, forme des bulles 50 qui remontent verticalement vers la surface liquide-air, c'est-à-dire vers la ligne de niveau L. Ces bulles 50, sur le chemin pour remonter vers le haut, ont des tailles fines contraintes par le passage aigu provoqué par les pics 372 du conduit de liaison 37 pour former des bulles plus fines. Les bulles 50 enveloppent des particules P. On peut imaginer des alternatives à ces pics, comme des dents en forme de peignes, des trous fins, ou toute forme créant des coins aigus en direction de la surface de la ligne de niveau du barbotage, afin de toujours générer les bulles les plus fines piégeant le plus de particules possible.

La taille des bulles fines dépend de celle des pics 372. Plus les pics 372 sont fins, c'est-à-dire l'angle au sommet supérieur 373 ou inférieur 374 de chaque pic triangulaire est petit, plus les bulles 50 sont fines. Or, plus les bulles 50 sont fines, plus le mouillage des particules est meilleur. On entend par un bon mouillage un taux d'humidification suffisant pour faire adhérer les particules à l'huile et éviter ainsi qu'elles poursuivent le chemin vers la turbine d'aspiration. Donc, le mouillage des particules dépend entres autres de la taille des pics 372 du conduit de liaison 37.

Un autre facteur qui influe le mouillage des particules est la distance d parcourue par les bulles fines 50 pour arriver jusqu'à l'interface liquide-air, c'est-à-dire jusqu'à la ligne de niveau L. Comme illustré à la figure 9, cette distance d parcourue est mesurée à partir du sommet supérieur 373 de chaque pic jusqu'à la ligne de niveau L. Pour un mouillage optimal des particules, cette distance d peut être de l'ordre de quelques millimètres.

La traverse de la zone de bullage 5 par le flux d'air A est une deuxième étape de collage, plus avancée, des particules avec du liquide dans le réservoir 32.

Le flux d'air A, sous forme de fines bulles 50 portant des particules, franchit la ligne de niveau L. Les bulles 50 s'éclatent à ce moment dans une zone appelée zone d'éclatement 6 située juste au-dessus de la ligne de niveau L et de la zone de bullage 5. En s'éclatant, les bulles 50 peuvent entrer en collision avec les particules restantes, non encore mouillées. C'est-à-dire que le reste des particules qui n'est pas encore humidifié en suspension au centre des bulles peut encore être mouillé par l'humidité dans la zone d'éclatement 6.

Les particules mouillées dans les trois zones suivantes, zone de barbotage, zone de bullage et zone d'éclatement, retombent dans le liquide 30 et ensuite vers le fond 321 du réservoir par effet de la gravité. De cette manière, les particules P sont captées par le liquide 30 dans le réservoir 32 et s'accumulent au fond de celui-ci. Le liquide dans le réservoir joue donc le rôle d'un filtre à poussière (ou à particules).

Après avoir traversé la zone d'éclatement 6, le flux d'air A est en quelques sortes libéré des particules dans la poussière. Il va vers la turbine d'aspiration 36 et il est ensuite expulsé vers l'extérieur par ladite turbine 36. De plus, un filtre en tissus ou mécanique peut être ajouté pour retenir les éventuelles particules résiduelles avant ou après la turbine d'aspiration afin de compléter le système de filtration humide.

L'avantage du système de freinage 1 avec l'organe collecteur de poussière 3 tel que décrit est qu'une fois les particules piégées, il n'y a aucun risque qu'elles puissent être disséminées dans l'environnement contrairement au système avec des filtres secs car elles sont piégées dans l'huile. De plus, une fois le fluide collecté lors d'une révision périodique, un filtrage par décantation permettre de séparer les particules du liquide et ainsi d'avoir un minimum de déchets à traiter, voire de réutiliser le fluide ainsi recyclé.

Bien entendu, il est possible d'apporter à l'invention de nombreuses modifications sans pour autant sortir du cadre de celle-ci , qui est défini par les revendications ci-jointes.

Par exemple, on peut adapter le système de freinage selon l'invention pour d'autres types de véhicule, notamment, pour les métros car la pollution aux particules résultant du système de freinage des métros est considérable.

Ce système peut être utilisé pour tout type d'aspiration en général ou tout type de filtration de gaz.

On peut remplacer de l'huile par un fluide désinfectant, fongicide ou bactéricide pour filtrer en plus les particules vectrices de pathogènes.

## Revendications

1. Système de freinage (1) pour véhicule comprenant :
- une garniture de frein destinée à venir frotter contre une roue du véhicule pour la freiner; le frottement entre la roue et la garniture de frein (21) générant de la poussière ;
- un organe collecteur de poussière (3) comprenant :
- une buse d'aspiration d'air (31) disposée à proximité immédiate de la garniture de frein;
- un réservoir collecteur de poussière (32) relié à la buse d'aspiration, le réservoir collecteur de poussière (32) contenant un fluide (30) à travers lequel passe l'air aspiré;
- une turbine d'aspiration d'air (36) installée à la suite du réservoir collecteur de poussière (32) ; ledit système de freinage (1) étant **caractérisé en ce que**
- le réservoir collecteur de poussière (32) comprend une turbine de barbotage (34) disposée au moins partiellement dans le fluide(30).

2. Système de freinage (1) selon la revendication 1, **caractérisé en ce qu'**un conduit de liaison (37) est relié d'une part à la turbine d'aspiration (36) et est immergé d'autre part au niveau central du fluide(30).

3. Système de freinage (1) selon la revendication 2, **caractérisé en ce que** le conduit de liaison (37) comprend une première extrémité (371) immergée dans le fluide (30) et comprenant des pics (372) s'étendant vers un fond (321) du réservoir collecteur de poussière (32).

4. Système de freinage (1) selon la revendication 3, **caractérisé en ce que** la distance (d) entre le sommet supérieur (373) de chaque pic (372) du conduit de liaison (37) et une ligne de niveau (L) au niveau central du fluide (30) est de l'ordre de quelques millimètres.

5. Système de freinage (1) selon l'une des revendications 1 à 4, **caractérisé en ce que** la turbine d'aspiration (36) entraîne la turbine de barbotage (34) en rotation au moyen d'un ensemble d'engrenage (38).

6. Système de freinage (1) selon la revendication 5, **caractérisé en ce que** l'ensemble d'engrenage (38) comprend un premier pignon (381) relié à la turbine d'aspiration (36) engrenant avec un deuxième pignon (382) relié à la turbine de barbotage (34); le premier pignon (381) ayant un diamètre plus petit que celui du deuxième pignon (382).

7. Système de freinage (1) selon l'une des revendications 1 à 4 , **caractérisé en ce que** les turbines d'aspiration et de barbotage sont entraînées par deux moteurs indépendants.

8. Système de freinage (1) selon l'une des revendications 1 à 7, ledit système (1) étant de type frein à disque comportant un piston actionnant sur la garniture de frein, **caractérisé en ce que** la turbine d'aspiration (36) et la turbine de barbotage (34) sont mises en rotation lorsque la pression dans le piston augmente.

9. Système de freinage (1) selon l'une des revendications précédentes, dans lequel la roue tournant selon un premier sens de rotation (R1), le système de freinage (1) étant **caractérisé en ce que** l'organe collecteur de poussière (3) comprend deux buses d'aspiration disposées respectivement en amont et en aval de la garniture de frein par rapport au premier sens de rotation (R1) de la roue.

10. Système de freinage (1) selon l'une des revendications précédentes, **caractérisé en ce que** le fluide (30) contenu dans le réservoir collecteur de poussière (32) est un liquide.

11. Système de freinage (1) selon la revendication 10, **caractérisé en ce que** le liquide contenu dans le réservoir collecteur de poussière (32) est de l'huile.

12. Véhicule automobile **caractérisé en ce qu'**il comprend un système de freinage (1) selon l'une des revendications précédentes.

## Patentansprüche

1. Bremssystem (1) für ein Fahrzeug, umfassend:
- einen Bremsbelag, der dazu bestimmt ist, an einem Rad des Fahrzeugs zu reiben, um es zu bremsen; wobei die Reibung zwischen dem Rad und dem Bremsbelag (21) Staub erzeugt;
- ein Staubsammelorgan (3), welches umfasst:
- eine Luftansaugdüse (31), die in unmittelbarer Nähe des Bremsbelages angeordnet ist;
- einen Staubsammelbehälter (32), der mit der Ansaugdüse verbunden ist, wobei der Staubsammelbehälter (32) ein Fluid (30) enthält, durch welches die angesaugte Luft strömt;
- eine Luftansaugturbine (36), die im Anschluss an den Staubsammelbehälter (32) angebracht ist;
wobei das Bremssystem (1) **dadurch gekennzeichnet ist, dass**
- der Staubsammelbehälter (32) eine Rührturbine (34) umfasst, die wenigstens teilweise im Fluid (30) angeordnet ist.

2. Bremssystem (1) nach Anspruch 1, **dadurch gekennzeichnet, dass** eine Verbindungsleitung (37) einerseits mit der Ansaugturbine (36) verbunden ist und andererseits in den mittleren Bereich des Fluids (30) eingetaucht ist.

3. Bremssystem (1) nach Anspruch 2, **dadurch gekennzeichnet, dass** die Verbindungsleitung (37) ein erstes Ende (371) umfasst, das in das Fluid (30) eingetaucht ist und Spitzen (372) umfasst, die sich in Richtung eines Bodens (321) des Staubsammelbehälters (32) erstrecken.

4. Bremssystem (1) nach Anspruch 3, **dadurch gekennzeichnet, dass** der Abstand (d) zwischen dem oberen Scheitelpunkt (373) jeder Spitze (372) der Verbindungsleitung (37) und einer Füllstandslinie (L) im mittleren Bereich des Fluids (30) in der Größenordnung von einigen Millimetern liegt.

5. Bremssystem (1) nach einem der Ansprüche 1 bis 4, **dadurch gekennzeichnet, dass** die Ansaugturbine (36) die Rührturbine (34) mittels einer Getriebeanordnung (38) drehend antreibt.

6. Bremssystem (1) nach Anspruch 5, **dadurch gekennzeichnet, dass** die Getriebeanordnung (38) ein mit der Ansaugturbine (36) verbundenes erstes Ritzel (381) umfasst, das mit einem mit der Rührturbine (34) verbundenen zweiten Ritzel (382) in Eingriff steht; wobei das erste Ritzel (381) einen kleineren Durchmesser als das zweite Ritzel (382) aufweist.

7. Bremssystem (1) nach einem der Ansprüche 1 bis 4, **dadurch gekennzeichnet, dass** die Ansaug- und die Rührturbine von zwei unabhängigen Motoren angetrieben werden.

8. Bremssystem (1) nach einem der Ansprüche 1 bis 7, wobei das System (1) vom Typ einer Scheibenbremse ist, die einen Kolben aufweist, der auf den Bremsbelag einwirkt, **dadurch gekennzeichnet, dass** die Ansaugturbine (36) und die Rührturbine (34) in Rotation versetzt werden, wenn sich der Druck im Kolben erhöht.

9. Bremssystem (1) nach einem der vorhergehenden Ansprüche, wobei, wenn sich das Rad in einer ersten Drehrichtung (R1) dreht, das Bremssystem (1) **dadurch gekennzeichnet ist, dass** das Staubsammelorgan (3) zwei Ansaugdüsen umfasst, die, bezogen auf die erste Drehrichtung (R1) des Rades, vor bzw. nach dem Bremsbelag angeordnet sind.

10. Bremssystem (1) nach einem der vorhergehenden Ansprüche, **dadurch gekennzeichnet, dass** das im Staubsammelbehälter (32) enthaltene Fluid (30) eine Flüssigkeit ist.

11. Bremssystem (1) nach Anspruch 10, **dadurch gekennzeichnet, dass** die im Staubsammelbehälter (32) enthaltene Flüssigkeit Öl ist.

12. Kraftfahrzeug, **dadurch gekennzeichnet, dass** es ein Bremssystem (1) nach einem der vorhergehenden Ansprüche umfasst.

## Claims

1. Brake system (1) for a vehicle, comprising:
- a brake lining intended to rub against a wheel of the vehicle in order to brake it; the friction between the wheel and the brake lining (21) generating dust;
- a dust-collecting member (3) comprising:
- an air-suction nozzle (31) arranged in the immediate vicinity of the brake lining;
- a dust-collecting reservoir (32) connected to the suction nozzle, the dust-collecting reservoir (32) containing a fluid (30) through which the sucked air passes;
- an air-suction turbine (36) installed following the dust-collecting reservoir (32);
said brake system (1) being **characterized in that**
- the dust-collecting reservoir (32) comprises a splash turbine (34) arranged at least partially in the fluid (30).

2. Brake system (1) according to Claim 1, **characterized in that** a connecting duct (37) is connected, on the one hand, to the suction turbine (36) and is submerged, on the other hand, at the central level of the fluid (30).

3. Brake system (1) according to Claim 2, **characterized in that** the connecting duct (37) comprises a first end (371) submerged in the fluid (30) and comprising spikes (372) extending towards a bottom (321) of the dust-collecting reservoir (32).

4. Brake system (1) according to Claim 3, **characterized in that** the distance (d) between the upper vertex (373) of each spike (372) of the connecting duct (37) and a level line (L) at the central level of the fluid (30) is of the order of a few millimetres.

5. Brake system (1) according to one of Claims 1 to 4, **characterized in that** the suction turbine (36) drives the splash turbine (34) in rotation by means of a gear assembly (38).

6. Brake system (1) according to Claim 5, **characterized in that** the gear assembly (38) comprises a first pinion (381) connected to the suction turbine (36) and engaging with a second pinion (382) connected to the splash turbine (34); the first pinion (381) having a diameter which is smaller than that of the second pinion (382).

7. Brake system (1) according to one of Claims 1 to 4, **characterized in that** the suction and splash turbines are driven by two independent motors.

8. Brake system (1) according to one of Claims 1 to 7, said system (1) being of the disc brake type comprising a piston acting on the brake lining, **characterized in that** the suction turbine (36) and the splash turbine (34) are set in rotation when the pressure in the piston increases.

9. Brake system (1) according to one of the preceding claims, in which, with the wheel rotating in a first direction of rotation (Rl), the brake system (1) being **characterized in that** the dust-collecting member (3) comprises two suction nozzles arranged respectively upstream and downstream of the brake lining with respect to the first direction of rotation (R1) of the wheel.

10. Brake system (1) according to one of the preceding claims, **characterized in that** the fluid (30) contained in the dust-collecting reservoir (32) is a liquid.

11. Brake system (1) according to Claim 10, **characterized in that** the liquid contained in the dust-collecting reservoir (32) is oil.

12. Motor vehicle, **characterized in that** it comprises a brake system (1) according to one of the preceding claims.
